(19) Europäisches Patentamt
European Patent Office
Office européen des brevets

(11) **EP 2 816 447 A1**

(12) **EUROPEAN PATENT APPLICATION**
published in accordance with Art. 153(4) EPC

(43) Date of publication:
**24.12.2014 Bulletin 2014/52**

(51) Int Cl.:
*G06F 3/02* (2006.01)      *G06F 3/03* (2006.01)
*G06F 3/033* (2013.01)      *G06F 1/16* (2006.01)

(21) Application number: **13749370.6**

(86) International application number:
**PCT/KR2013/001095**

(22) Date of filing: **13.02.2013**

(87) International publication number:
**WO 2013/122368 (22.08.2013 Gazette 2013/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.02.2012   KR 20120016423**

(71) Applicant: **PNF CO., LTD.**
**Seongnam-si, Gyeonggi-do 462-720 (KR)**

(72) Inventor: **LEE, Jae Jun**
**Seoul 138-747 (KR)**

(74) Representative: **ABG Patentes, S.L.**
**Avenida de Burgos, 16D**
**Edificio Euromor**
**28036 Madrid (ES)**

(54) **KEYBOARD ENABLING INPUTTING OF POSITION INFORMATION AND KEYBOARD SYSTEM COMPRISING SAME**

(57)   Disclosed are a position information inputting keyboard and a keyboard system including the same. A reference signal receiving unit and ultrasonic signal receiving units are installed on a side surface of a keyboard having thereon a keypad. A reference signal and ultrasonic signals generated from an electronic pen are received, so that a position of the electronic pen can be measured. Thus, a user can input both key input information and position information to an electronic device such as a smart pad or a notebook, using the keyboard.

FIG. 2

EP 2 816 447 A1

## Description

## TECHNICAL FIELD

The present invention relates to a keyboard, and more particularly, to a position information inputting keyboard.

## BACKGROUND ART

A keyboard, an information input means for inputting text information to a computer, is the most generalized information input means together with a mouse for inputting position information and click information. However, with the development of recent information and communications technology (ICT), a portable information communication terminal has rapidly spread. Further, many people access to the Internet using a portable information communication terminal such as a smart phone and a smart pad rather than a computer, thereby searching for information and playing multimedia content such as moving images.

For maximized portability, most portable information communication terminals are provided with a touch screen for inputting position information and text information therethrough. However, inputting information using a touch screen may have the following problems. Firstly, in case of inputting text information using a touch screen, a user's inconvenience may be more caused than in a case of inputting text information using a keyboard. Secondly, in case of inputting position information using a touch screen, information is input in a less sophisticated (elaborate) manner, than in a case of using an exclusive position information input device such as a mouse or an electronic pen.

Due to such disadvantages, at a fixed place such as a home or an office, a user inputs information by connecting a keyboard, a mouse, etc. to a portable information communication terminal by wire or wirelessly. However, connecting a plurality of information input devices to the portable formation communication terminal may cause a user's inconvenience.

## DISCLOSURE OF THE INVENTION

Therefore, an object of the present invention is to provide a keyboard capable of inputting both of text information and position information to a portable information communication terminal, and a keyboard system having the same.

To achieve these and other advantages and in accordance with the purpose of the present invention, as embodied and broadly described herein, there is provided a position information inputting keyboard, including: a housing having a keypad unit on an upper surface thereof; a reference signal receiving unit installed on a side surface or a front surface of the housing, and configured to receive a reference signal from an electronic pen; a plurality of ultrasonic signal receiving units installed on a side surface or a front surface of the housing with a distance therebetween, and configured to receive ultrasonic signals from the electronic pen; a position measuring unit installed in the housing, and configured to measure a position of the electronic pen, based on times when a reference signal and ultrasonic signals have been received by the reference signal receiving unit and the ultrasonic signal receiving units, respectively; and a keyboard control unit configured to transmit key input information input from the keypad unit, and position information input from the position measuring unit, to an electronic device.

The reference signal receiving unit and the plurality of ultrasonic signal receiving units may be formed on the same side surface or the same front surface of the housing.

The reference signal receiving unit and the plurality of ultrasonic signal receiving units may be installed in a receiving module. The receiving module may be connected to a module connection unit of the housing to thus be electrically-connected to the position measuring unit.

The reference signal receiving unit, the plurality of ultrasonic signal receiving units, and the position measuring unit may be installed in a receiving module. The receiving module may be connected to a module connection unit of the housing, so that the position measuring unit may be electrically-connected to the keyboard control unit.

The module connection unit includes: a module accommodation recess configured to accommodate the receiving module therein; and a connector installed in the module accommodation recess and electrically-connected to the receiving module.

An electronic pen accommodation unit configured to accommodate the electronic pen therein may be formed in the housing.

A charging terminal, connected to a charging electrode of the electronic pen, may be installed in the electronic pen accommodation unit. The keyboard may further comprise a charging unit configured to charge the electronic pen by supplying a charging current to the electronic pen through the charging terminal.

The keyboard may further include a communication unit configured to transmit position information and key input information each input from the keyboard control unit, to the electronic device, by a short-range wireless communication method.

To achieve these and other advantages and in accordance with the purpose of the present invention, as embodied and broadly described herein, there is also provided a keyboard system, including: the keyboard for inputting position information; and a stand configured to support the electronic device, and configured to supply power received from an external power source to the keyboard and the electronic device.

An electronic device connection unit for connecting the electronic device thereto, a keyboard connection unit for connecting the keyboard thereto, and a power connection unit for connecting the external power source thereto may be installed at the stand.

In a case where the external power source is supplied through a communication port of another electronic device, the electronic device and said another electronic device may be synchronized with each other by performing communication via the stand.

[ADVANTAGES]

In the present invention, the reference signal receiving unit and the ultrasonic signal receiving units are installed on a side surface of the keyboard having thereon a keypad. A reference signal and ultrasonic signals generated from the electronic pen are received, so that a position of the electronic pen can be measured. Thus, a user can input both key input information and position information to the electronic device such as a smart pad or a notebook, using the keyboard.

**BRIEF DESCRIPTION OF THE DRAWINGS**

FIG. 1 is a block diagram illustrating a detailed configuration of a position information inputting keyboard according to an embodiment of the present invention;

FIG. 2 is a view for explaining an appearance and a usage method of a position information inputting keyboard according to an embodiment of the present invention;

FIG. 3 is a view illustrating an example to accommodate an electronic pen in a keyboard according to an embodiment of the present invention;

FIG. 4 is a view illustrating a configuration of a keyboard system according to an embodiment of the present invention;

FIGS. 5A and 5B are views illustrating an example to couple a receiving module to a module connection unit of a keyboard; and

FIG. 6 is a view illustrating an example to input information by coupling a plurality of receiving modules to module connection units of a keyboard.

**MODES FOR CARRYING OUT THE PREFERRED EMBODIMENTS**

Reference will now be made in detail to the preferred embodiments of the present invention, examples of which are illustrated in the accompanying drawings. It will also be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

Description will now be given in detail of a position information inputting keyboard and a keyboard system including the same according to preferred embodiments, with reference to the accompanying drawings.

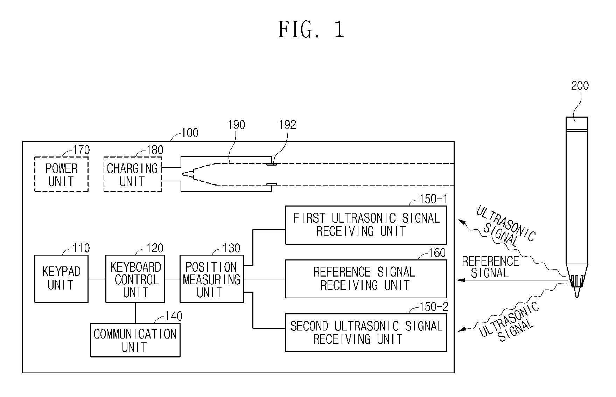

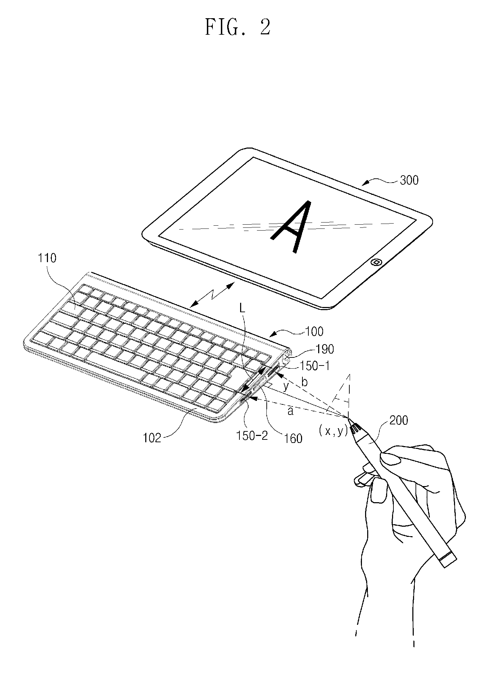

FIG. 1 is a block diagram illustrating a detailed configuration of a position information inputting keyboard according to an embodiment of the present invention, and FIG. 2 is a view for explaining an appearance and a usage method of a position information inputting keyboard according to an embodiment of the present invention.

A position information inputting keyboard 100 according to an embodiment of the present invention (hereinafter, will be referred to as 'keyboard' 100) is a wired or wireless keyboard. The keyboard 100 is provided with receivers for receiving ultrasonic signals and a reference signal (an infrared signal, an RF signal, etc., which proceed at a speed of light), at one side surface or a plurality of side surfaces thereof. The keyboard 100 is configured to receive a reference signal and an ultrasonic signal from a signal generating device implemented as an electronic pen 200, thereby measuring a position of the electronic pen 200. The keyboard is also configured to transmit position information on the electronic pen 200 to an electronic device 200 connected to the keyboard 100 by wire or wirelessly (e.g., computer, notebook, tablet PC, smart pad, smart phone, etc.), thereby inputting the position information on the electronic pen 200 to the electronic device 300. The keyboard 100 has the same functions as a general wired or wireless keyboard, except for such position information inputting function.

Referring to FIG. 1, the position information inputting keyboard 100 according to an embodiment of the present invention includes a keypad unit 110, a keyboard control unit 120, a position measuring unit 130, a communication unit 140, a reference signal receiving unit 160, and a plurality of ultrasonic signal receiving units 150-1 and 150-2. In a case where the keyboard 100 performs wireless communication with the electronic device 300, the keyboard 100 further includes a power unit 170. The power unit 170 is implemented as a primary battery or a secondary battery, and is configured to supply power to components inside the keyboard 100.

The keypad unit 110 is formed to have the same configuration as a keypad of a general keyboard, and is configured to output key input information corresponding to a key pressed by a user, to the keyboard control unit 120.

The keyboard control unit 120 controls entire functions of the keyboard 100. Especially, the keyboard control unit 120 is configured to transmit key input information input from the keypad unit 110, and position information on the electronic pen 200 input from the position measuring unit 130, to the electronic device 300 through the communication unit 140.

The communication unit 140 transmits, to the electronic device 300, the key input information and the position information input from the keyboard control unit 120. In a case where the keyboard 100 is connected to the electronic device 300 by wire, the communication unit 140 transmits such information to the electronic device 300 by a USB communication method or through a serial port. On the contrary, in a case where the keyboard 100 is connected to the electronic device 300 by wireless manner, the communication unit 140 transmits such information to the electronic device 300 by a short-range wireless communication method such as Bluetooth, or an RF wireless communication method.

The reference signal receiving unit 160 is configured to receive a reference signal generated from the electronic pen 200, and to output the received reference signal to the position measuring unit 130. The plurality of ultrasonic signal receiving units 150-1 and 150-2 are spaced from each other by a predetermined distance. And the plurality of ultrasonic signal receiving units 150-1 and 150-2 are configured to receive an ultrasonic signal generated from the electronic pen 200, and to output the received ultrasonic signal to the position measuring unit 130. In the present invention, two ultrasonic signal receiving units 150-1 and 150-2 are installed at two sides of the reference signal receiving unit 160. However, the present invention is not limited to this configuration.

The position measuring unit 130 measures a position of the electronic pen 200, based on a time difference between a reception time when a reference signal generated from the electronic pen 200 has been received by the reference signal receiving unit 160, and reception times when ultrasonic signals generated from the electronic pen 200 have been received by the ultrasonic signal receiving units 150-1 and 150-2, respectively. Then the position measuring unit 130 outputs information on the measured position of the electronic pen 200, to the keyboard control unit 120. A method of measuring a position of the electronic pen 200 by the position measuring unit 130 will be explained later with reference to FIG. 2

The keyboard control unit 120, the communication unit 140 and the position measuring unit 130 are installed in a housing 102. The keypad unit 110 is installed on an upper surface of the housing 102 like the general keyboard 100. And the reference signal receiving unit 160 and the plurality of ultrasonic signal receiving units 150-1 and 150-2 are installed on a side surface of the housing 102 so as to be exposed to outside.

An electronic pen accommodation unit 190 configured to accommodate the electronic pen 200 therein may be further formed in the housing 102. In a case where the electronic pen 200 is driven by a secondary battery, a charging terminal 192, connected to a charging electrode of the electronic pen 200 for charging of the electronic pen 200, is installed in the electronic pen accommodation unit 190. A charging unit 180, configured to supply a charging current to the electronic pen 200 through the charging terminal, may be further formed in the housing 102.

FIG. 2 is a view for explaining a method of measuring a position of the electronic pen 200 and inputting position information to the electronic device 300, according to an embodiment of the present invention.

In FIG. 2, the keyboard 100 according to the present invention inputs key input information and position information on the electronic pen 200, to the electronic device 300, by performing communication with the electronic device 300 implemented as a smart pad, by a short-range wireless communication method such as Bluetooth. However, key input information and position information can be also input in a state where the electronic device 300 is implemented as a notebook, and the keyboard 100 has been connected to the notebook by wire.

A method of measuring position information on the electronic pen 200 will be explained. The reference signal receiving unit 160 is installed on one side surface of the housing 102 of the keyboard 100, so as to be exposed to outside. The plurality of ultrasonic signal receiving units 150-1 and 150-2 are installed on the same side surface as the reference signal receiving unit 160, with a distance "L" therebetween. The ultrasonic signal receiving units 150-1 and 150-2 are installed at two sides of the reference signal receiving unit 160 so as to be exposed to outside of the housing 102.

The electronic pen 200 is configured to generate a reference signal and ultrasonic signals at the same time periods. The generated reference signal and ultrasonic signals are received by the reference signal receiving unit 160 and the two ultrasonic signal receiving units 150-1 and 150-2, respectively. In the preferred embodiment of the present invention, a reference signal and ultrasonic signals are simultaneously generated. However, a reference signal and ultrasonic signals may be generated with a predetermined time difference.

Coordinates (x,y) of the electronic pen 200 on a two-dimensional plane can be obtained by the following formula 1.

【Formula 1】

$$a^2 = x^2 + y^2$$
$$b^2 = (L-x)^2 + y^2$$

It is assumed that a reference signal is generated from the electronic pen 200 together with an ultrasonic signal. It is also assumed that the reference signal is received by the reference signal receiving unit 160 at the same time as the reference signal is generated, because it proceeds at a speed of light. Under such assumptions, distances 'a' and 'b' may be calculated by multiplying a sonic speed with a time difference between a reception time when a reference signal has been received by the reference signal receiving unit 160, and reception times when ultrasonic signals have been received by the ultrasonic signal receiving units 150-1 and 150-2, respectively. The distance 'L' is a predetermined value. Thus, coordinates (x,y) can be obtained by applying 'a', 'b' and 'L' to the formula 1.

The position measuring unit 130 measures a position of the electronic pen 200 by the aforementioned formula 1, and outputs position information to the keyboard control unit 120. The keyboard control unit 120 outputs the position information to the communication unit 140, together with key input information input from the keypad unit 110. The communication unit 140 converts information input from the keyboard control unit 120, and transmits the converted information to the electronic device 300. The electronic device 300, which has received position information on the electronic pen 200, may use the position information on the electronic pen 200 in the same manner as position information on a mouse.

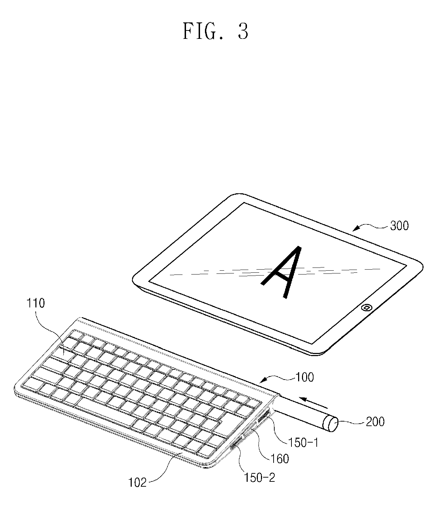

Upon completion of the usage of the electronic pen 200, as shown in FIG. 3, a user inserts the electronic pen 200 into the electronic pen accommodation unit 190 of the keyboard 100. As aforementioned, in a state where the electronic pen 200 has been accommodated in the electronic pen accommodation unit 190, the electronic pen 200 may be charged as the charging electrode thereof comes in contact with the charging terminal of the electronic pen accommodation unit 190. The electronic pen 200 may be charged only when the keyboard 100 is provided with power from the electronic device 300 by wire.

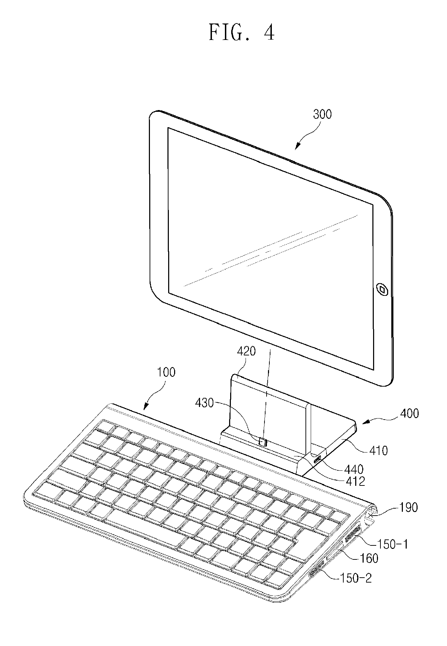

FIG. 4 is a view illustrating a configuration of a keyboard system according to an embodiment of the present invention. The keyboard system according to the present invention includes the position information inputting keyboard 100 shown in FIGS. 1 to 3, and a stand 400 shown in FIG. 4.

The stand 400 is configured to support the plate-shaped electronic device 300 such as a smart pad, at a predetermined angle with respect to a user, so that the user can conveniently see a screen of the electronic device 300.

Referring to FIG. 4, the stand 400 includes a base 410 arranged on a writing surface where information is input using the electronic pen 200, and a rear surface supporting unit 420 coupled to the base 410 at a predetermined angle. One side surface of the plate-shaped electronic device 300 is supported on an upper surface of the base 410, and a rear surface thereof is supported by contacting the rear surface supporting unit 420.

The base 410 may be configured as a plane having the same height. However, in FIG. 4, a protrusion 412 is formed at the base 410 so that a coupling region between the base 410 and the rear surface supporting unit 420 can protrude. An upper surface of the protrusion 412 is formed to be flat so that one side surface of the electronic device 300 can be placed thereon.

FIG. 4 illustrates an example to couple the base 410 with the rear surface supporting unit 420 at a fixed angle therebetween. However, it is obvious to those skilled in the art that a user can couple the base 410 with the rear surface supporting unit 420 by a hinge coupling, etc., at a controllable angle therebetween.

The shape of the stand is merely exemplary. The stand according to the present invention may be provided with an accommodation recess for accommodating the electronic device 300 in the base 410. In this case, an electronic device connection unit to be explained later is formed in the accommodation recess.

The stand 400 according to the present invention may be configured to receive an external power, and to supply the received external power to the electronic device 300 and the keyboard 100. In this case, an electronic device connection unit 430 for connecting the electronic device 300 thereto is installed at the protrusion 412 of the stand 400, where the electronic device 300 is held. A keyboard connection unit (not shown) is installed at one end of the base 410. A power connection unit 440, to which an external power is applied, is installed on a side surface of the stand 400.

The electronic device connection unit 430 and the keyboard connection unit may be implemented as standardized connection terminals such as USBs, or may be implemented as connection terminals suitable for a specific electronic device and keyboard manufacturing company. The power connection unit 440 of the stand 400 is provided with power by being connected to an adaptor for supplying power of a constant voltage, a USB connection terminal of a computer, or the like.

Power, applied to the power connection unit 440, is supplied to the electronic device 300 through the electronic device connection unit 430, thereby driving or charging the electronic device 300. And the power is supplied to the keyboard 100 through the keyboard connection unit, thereby driving or charging the keyboard 100.

In a case where a communication port such as a USB port of a computer or a notebook has been connected to the power connection unit 440, and in a case where a smart pad, a smart phone or the like has been connected to the electronic device connection unit 430 to thus be supplied with power through the communication port of the computer or the notebook, the computer or the notebook may perform synchronization with the smart pad or the smart phone.

In the aforementioned embodiment, the ultrasonic signal receiving units 150-1, 150-2 and the reference signal receiving unit 160 are fixed to one surface of the keyboard (e.g., a left side surface, a right side surface or a front surface). However, in this case, a user may have inconvenience in using the keyboard, because the user should input information only on one surface of the keyboard where the receiving units have been installed, regardless of whether the user is right-handed or left-handed.

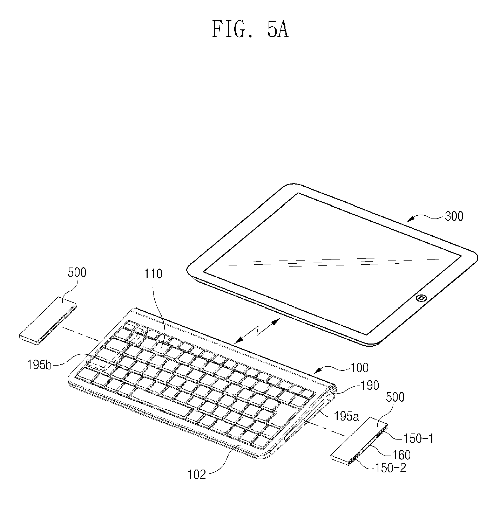

In order to solve such problem, as shown in FIGS. 5A to 6, the ultrasonic signal receiving units 150-1, 150-2 and the reference signal receiving unit 160 are installed in a receiving module. The receiving module is configured to be directly connected to or separated from a module connection unit formed at a plurality of regions of the keyboard by a user.

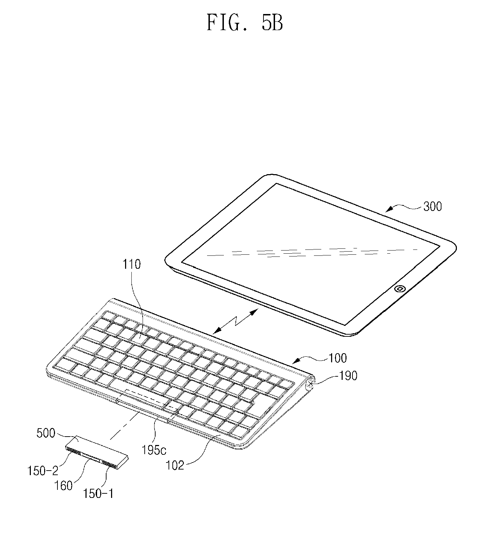

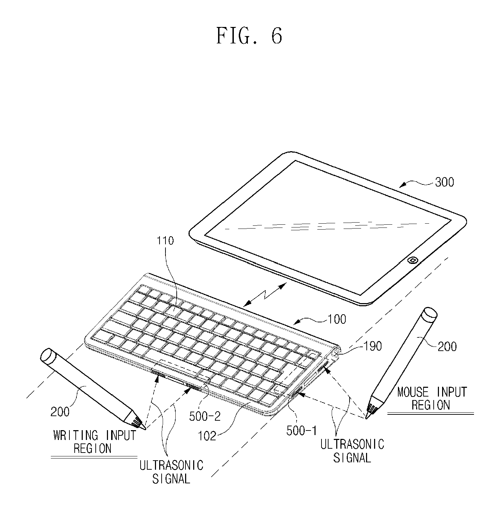

FIGS. 5A and 5B are views illustrating an example to couple a receiving module to a module connection unit of the keyboard. FIG. 6 is a view illustrating an example to input information by coupling a plurality of receiving modules to module connection units of the keyboard.

Referring to FIGS. 5A to 6, the ultrasonic signal receiving units 150-1, 150-2 and the reference signal receiving unit 160 are installed in a receiving module 500. Then the receiving module 500 is electrically-connected, by a user, to a module connection unit 195a or 195b formed on a right side surface or a left side surface of the keyboard (refer to FIG. 5A), or a module connection unit 195c formed on a front surface of the keyboard (refer to FIG. 6).

Referring to FIGS. 5A to 6, the module connection unit 195a, 195b or 195c includes a module accommodation recess installed at the keyboard, and a connector (not shown) installed in the module accommodation recess and electrically-connected to the receiving module. The receiving module is inserted into the module accommodation recess, thereby electrically-connecting the ultrasonic signal receiving units 150-1, 150-2 and the reference signal receiving unit 160 installed in the receiving module 500, with the position measuring unit 130 of the keyboard 100. Thus, a user can insert the receiving module 500 into the module accommodation recess formed on a left side surface, a right side surface or a front surface of the keyboard, according to his or her convenient (preferable) direction.

In the aforementioned embodiment, the module connection unit is composed of the module accommodation recess and the connector. However, the module connection unit may be implemented only as a connector protruding toward outside of the housing.

The receiving module 500 may further include the position measuring unit 130, as well as the ultrasonic signal receiving units 150-1, 150-2 and the reference signal receiving unit 160. In this case, the position measuring unit 130 may be electrically-connected to the keyboard control unit 120 through the connector of the module connection unit 195a, 195b or 195c.

As shown in FIG. 6, a user may connect two or more receiving modules 500 to the keyboard. In this case, an input region may be divided according to positions of the respective receiving modules 500. For instance, as shown in FIG. 6, if a user moves the electronic pen 200 on a right side of the keyboard, a reference signal and ultrasonic signals generated from the electronic pen 200 are received by a receiving module 500-1 installed on a right surface of the keyboard. Thus, position information on the electronic pen 200 is used as mouse input information. Then, if the user moves the electronic pen 200 to a front side of the keyboard, a reference signal and ultrasonic signals generated from the electronic pen 200 are received by a receiving module 500-2 installed on a front surface of the keyboard. Position information on the electronic pen 200 is used as writing input information.

The keyboard aforementioned with reference to FIGS. 5A to 6 may be coupled to the stand 400 shown in FIG. 4.

It will be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

## Claims

1. A keyboard, comprising:

   a housing having a keypad unit on an upper surface thereof;
   a reference signal receiving unit installed on a side surface or a front surface of the housing, and configured to receive a reference signal from an electronic pen;
   a plurality of ultrasonic signal receiving units installed on a side surface or a front surface of the housing with a distance therebetween, and configured to receive ultrasonic signals from the electronic pen;
   a position measuring unit installed in the housing, and configured to measure a position of the electronic pen, based on times when a reference signal and ultrasonic signals have been received by the reference signal receiving unit and the ultrasonic signal receiving units, respectively; and
   a keyboard control unit configured to transmit key input information input from the keypad unit, and position information input from the position measuring unit, to an electronic device.

2. The keyboard of claim 1, wherein the reference signal receiving unit and the plurality of ultrasonic signal receiving units are formed on the same side surface or the same front surface of the housing.

3. The keyboard of claim 1, wherein the reference signal receiving unit and the plurality of ultrasonic signal receiving units are installed in a receiving module, and
   wherein the receiving module is connected to a module connection unit of the housing, to thus be electrically-connected to the position measuring unit.

**EP 2 816 447 A1**

**4.** The keyboard of claim 1, wherein the reference signal receiving unit, the plurality of ultrasonic signal receiving units, and the position measuring unit are installed in a receiving module, and

wherein the receiving module is connected to a module connection unit of the housing, so that the position measuring unit is electrically-connected to the keyboard control unit.

**5.** The keyboard of claim 3 or 4, wherein the module connection unit includes:

a module accommodation recess configured to accommodate the receiving module therein; and

a connector installed in the module accommodation recess and electrically-connected to the receiving module.

**6.** The keyboard of claim 1, wherein an electronic pen accommodation unit configured to accommodate the electronic pen therein is formed in the housing.

**7.** The keyboard of claim 6, wherein a charging terminal, connected to a charging electrode of the electronic pen, is installed in the electronic pen accommodation unit, and

wherein the keyboard further comprises a charging unit configured to charge the electronic pen by supplying a charging current to the electronic pen through the charging terminal.

**8.** The keyboard of claim 1, further comprising a communication unit configured to transmit position information and key input information each input from the keyboard control unit, to the electronic device, by a short-range wireless communication method.

**9.** A keyboard system, comprising:

the keyboard of one of claims 1 to 4 and claims 6 to 8; and

a stand configured to support the electronic device, and configured to supply power received from an external power source to the keyboard and the electronic device.

**10.** The keyboard system of claim 9, wherein an electronic device connection unit for connecting the electronic device thereto, a keyboard connection unit for connecting the keyboard thereto, and a power connection unit for connecting the external power source thereto are installed at the stand.

**11.** The keyboard system of claim 9, wherein in a case where the external power source is supplied through a communication port of another electronic device, the electronic device and said another electronic device are synchronized with each other by performing communication via the stand.

FIG. 1

FIG. 2

FIG. 3

FIG. 4

FIG. 5A

FIG. 5B

FIG. 6

## INTERNATIONAL SEARCH REPORT

International application No.

**PCT/KR2013/001095**

**A.    CLASSIFICATION OF SUBJECT MATTER**

*G06F 3/02(2006.01)i, G06F 3/03(2006.01)i, G06F 3/033(2006.01)i, G06F 1/16(2006.01)i*

According to International Patent Classification (IPC) or to both national classification and IPC

**B.    FIELDS SEARCHED**

Minimum documentation searched (classification system followed by classification symbols)
G06F 3/02; G06F 3/03; G06F 3/033; G06F 1/16; A47B 19/00; G06F 3/043; G06F 3/0354; A47B 21/007

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: keyboard, location measurement of electronic pen, reference signal, ultrasonic signal, charging of electronic pen, mouse function keyboard

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2008-0064281 A (KIM, Tae Kyun) 09 July 2008<br>See paragraphs [0022]-[0025], [0027]-[0030], [0032]-[0033] and [0041]; claims 1-2 and 4; and figures 1-2 and 4. | 1-6,8 |
| A | | 7,9-11 |
| Y | KR 10-2011-0093278 A (PNF CO.,LTD) 18 August 2011<br>See paragraphs [0035]-[0037], [0044]-[0046] and [0058]-[0059]; claims 1 and 4; and figures 1-2 and 3-4b. | 1-6,8 |
| A | KR 10-1113247 B1 (OMNIO CORPORATION et al.) 20 February 2012<br>See paragraphs [0020]-[0023] and [0030]-[0033]; claims 1-2; and figures 1-2. | 1-11 |
| A | JP 05-027898 A (CITIZEN WATCH CO., LTD.) 05 February 1993<br>See paragraphs [0006]-[0007] and [0010]; claim 1; and figure 1. | 1-11 |
| A | JP 2002-132422 A (YANG, Tai-Her) 10 May 2002<br>See paragraphs [0005], [0010]-[0015] and [0019]-[0027]; and figures 5-10 and 12-18. | 1-11 |

☐    Further documents are listed in the continuation of Box C.　　☒    See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 24 JUNE 2013 (24.06.2013) | **24 JUNE 2013 (24.06.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/001095**

| Patent document cited in search report | Publication date | Patent family member | Publication date |
|---|---|---|---|
| KR 10-2008-0064281 A | 09.07.2008 | NONE | |
| KR 10-2011-0093278 A | 18.08.2011 | NONE | |
| KR 10-1113247 B1 | 20.02.2012 | KR 10-2011-0105995 A | 28.09.2011 |
| JP 05-027898 A | 05.02.1993 | NONE | |
| JP 2002-132422 A | 10.05.2002 | JP 4718671 B2 | 06.07.2011 |

Form PCT/ISA/210 (patent family annex) (July 2009)